# FASCICULE DE BREVET EUROPEEN

(11) **EP 2 774 806 B1**
(45) Date de publication et mention de la délivrance du brevet: **06.04.2016**
(21) Numéro de dépôt: 14156012.8
(22) Date de dépôt: 20.02.2014
(51) Int. Cl.: B60N 2/48

(54) **DISPOSITIF DE BLOCAGE EN COULISSEMENT D'UNE TIGE CRANTÉE D'ASSOCIATION D'UN APPUI-TÊTE À UN DOSSIER DE SIÈGE DE VÉHICULE AUTOMOBILE**
BLOCKIERVORRICHTUNG FÜR DAS GLEITEN EINER VERBINDUNGSMETALLSTANGE EINER KOPFSTÜTZE AN DER RÜCKENLEHNE EINES AUTOSITZES
DEVICE FOR PREVENTING THE SLIDING OF A RING-THREADED SHANK FOR COMBINING A HEADREST WITH A BACKREST OF AN AUTOMOBILE SEAT

(30) Priorité: 05.03.2013 FR 1351981
(43) Date de publication de la demande: 10.09.2014
(73) Titulaire: Cera TSC, 75008 Paris (FR)
(72) Inventeur: Bonfils, Xavier, 51100 Reims (FR)
(74) Mandataire: Sayettat, Julien Christian

(56) Documents cités:
- DE-A1- 10 104 386
- DE-A1-102005 012 896
- FR-A- 1 561 172

## Description

L'invention concerne un agencement comprenant un dispositif de blocage en coulissement d'une tige crantée d'association d'un appui-tête à un dossier de siège de véhicule automobile ainsi qu'une tige une gaine d'un tel agencement.

Un agencement selon le préambule de la revendication 1 est connu du document DE-A-102008012 896. Ce document correspond également au préambule de la revendication 11.

Dans les réalisations connues, le bord de blocage est notamment sous forme d'une épingle ou d'une lame, métallique ou plastique, la tige étant pourvue d'une pluralité de crans espacés les uns des autres, de façon à pouvoir recevoir ledit bord selon une pluralité de positions et permettre ainsi un blocage de ladite tige selon une pluralité de positions en hauteur, ceci afin de régler la position verticale de l'appui-tête.

Le blocage de l'appui-tête dans une position de réglage donnée met à contribution un seul et unique cran de blocage.

Par conséquent, les efforts de tenue de l'appui-tête dans la position de réglage choisie passent uniquement par cet ensemble bord de blocage / cran.

Pour que l'appui-tête puisse jouer pleinement sa fonction de sécurité, cet ensemble doit être dimensionné en conséquence, ce qui induit un volume de matière suffisant au niveau du bord de blocage, ainsi qu'une profondeur et une hauteur de crans importantes.

Il en résulte plusieurs conséquences :
- la profondeur importante du cran fragilise la tige ; il est donc nécessaire d'augmenter sa section pour obtenir une bonne résistance, ce qui a pour effet d'augmenter sa masse et son coût,
- dans le cas d'une tige à base de tube métallique, la profondeur du cran est souvent plus importante que l'épaisseur dudit tube, ce qui peut occasionner des « crevés ». Pour y remédier, il est courant d'avoir recours à des procédés de formage des crans de type « roulage formage » (« rolling forming » en anglais), afin de déformer la matière avant formage du cran, ce qui induit des surcoûts de fabrication,
- encore en raison de la profondeur des crans, il est nécessaire de déplacer le bord de crantage sur une longue course pour le désengager desdits crans, ce qui est peu ergonomique,
- toujours en raison de la profondeur des crans, quand lesdits crans sont conformés de façon à permettre un coulissement de la tige vers le haut sans actionnement du moyen de déblocage, il se produit un bruit important et il est requis un effort non négligeable de la part de l'utilisateur pour déplacer ladite tige vers le haut en passant de cran en cran,
- le nombre de positions de réglage est réduit du fait de la hauteur de cran importante qui implique un espace inter-crans important.

L'invention a pour but de pallier ces inconvénients.

A cet effet, et selon un premier aspect, l'invention propose un agencement selon la revendication 1.

Dans cette description, sauf mention contraire, les termes de positionnement dans l'espace (haut, bas, vertical,...) sont pris en référence au dispositif en place dans le véhicule, l'appui-tête étant disposé en configuration d'utilisation sur un siège dont le dossier est disposé sensiblement à la verticale.

Le terme « radial », est considéré relativement à l'axe de la tige. Dans le cas d'une tige présentant une courbure, l'axe est considéré relativement à la zone de tige concernée.

Avec l'agencement proposé, on observe les avantages suivants :
- le fait de réaliser un crantage multiple, par la coopération de crémaillères réciproques, permet de réduire la profondeur de cran; ce qui permet de limiter la fragilisation de la tige et d'utiliser, dans le cas de tiges à base de tube métallique, des tubes de plus faible épaisseur, avec les gains qui en résultent en termes de masse et de coût,
- dans le cas d'une tige à base de tube métallique, une faible profondeur de cran permet d'éviter le phénomène de « crevés »,
- une faible profondeur de cran, permet de réduire la course du bord de crantage pour le désengager dudit cran, ce qui améliore l'ergonomie,
- de plus, quand les crans sont conformés de façon à permettre un coulissement de la tige vers le haut sans actionnement du moyen de déblocage, il se produit un bruit atténué et il est requis un effort négligeable de la part de l'utilisateur pour déplacer ladite tige vers le haut en passant de cran en cran,
- le fait de réaliser un crantage multiple permet de réduire la hauteur de cran et donc de diminuer l'espace inter-crans, ce qui permet d'augmenter le nombre de positions de réglage et donc le confort et la sécurité du passager.

Selon un deuxième aspect, l'invention propose une gaine d'un tel agencement.

D'autres particularités et avantages de l'invention apparaîtront dans la description qui suit, faite en référence aux figures jointes, dans lesquelles :
- les figures 1 sont des vues de face schématiques partielles d'un dispositif de blocage selon l'art antérieur (1a) et selon le principe de l'invention (1 b), la tige étant bloquée en coulissement,
- les figures 2 sont des vues de face schématiques partielles d'un dispositif de blocage selon un premier mode de réalisation, la tige étant bloquée en coulissement (2a) et débloquée (2b),
- les figures 3 sont des vues de face schématiques partielles d'un dispositif de blocage selon un deuxième mode de réalisation, la tige étant bloquée en coulissement (3a) et débloquée (3b),
- les figures 4 sont des vues de face schématiques partielles d'une tige selon une première variante (4a) et selon une deuxième variante (4b) de réalisation,
- les figures 5 sont des vues en perspective partielle (5a) et en section radiale (5b) d'une tige de section oblongue.

En référence aux figures, on décrit un dispositif 1 de blocage en coulissement d'une tige 2 crantée d'association d'un appui-tête à un dossier de siège de véhicule automobile, ledit dispositif comprenant une gaine 3 de réception de ladite tige en coulissement et une pièce 4 de blocage - par exemple en matériau plastique moulé ou en métal - montée mobile en translation radiale par rapport à ladite gaine, ladite pièce comprenant un bord 5 de blocage agencé pour pouvoir se cranter dans ladite tige, sous l'effet d'un moyen ressort 6, de façon à la bloquer en coulissement, ledit dispositif comprenant en outre un moyen de déblocage 7 permettant un écartement radial de ladite pièce de ladite tige afin de permettre son déblocage, ledit bord étant sous forme d'une crémaillère 16 comprenant une pluralité de dents 8 contigües s'étageant verticalement, ladite tige étant pourvue d'une crémaillère réciproque 17 comprenant une pluralité de crans 9 contigus, l'espace inter-crans successifs étant similaire à l'espace inter-dents successives de sorte que lesdits crans puissent recevoir lesdites dents pour bloquer ladite tige, ladite crémaillère réciproque étant de hauteur 10 supérieure à celle 11 de ladite crémaillère de façon à permettre un blocage de ladite tige selon une pluralité de positions en hauteur.

Selon les réalisations représentées, la crémaillère 16 comprend au moins dix dents 8.

Selon une réalisation, la hauteur 19 de cran 9 est inférieure à 2,5 mm, et notamment inférieure à 1,5 mm, ce qui permet de bénéficier d'au moins 30 positions de réglage pour une course de 45 mm, sachant que dans les réalisations de l'art antérieur, on dispose par exemple d'environ 6 positions de réglage pour une course analogue.

Selon une réalisation, la profondeur 20 de cran 9 est inférieure à 1 mm.

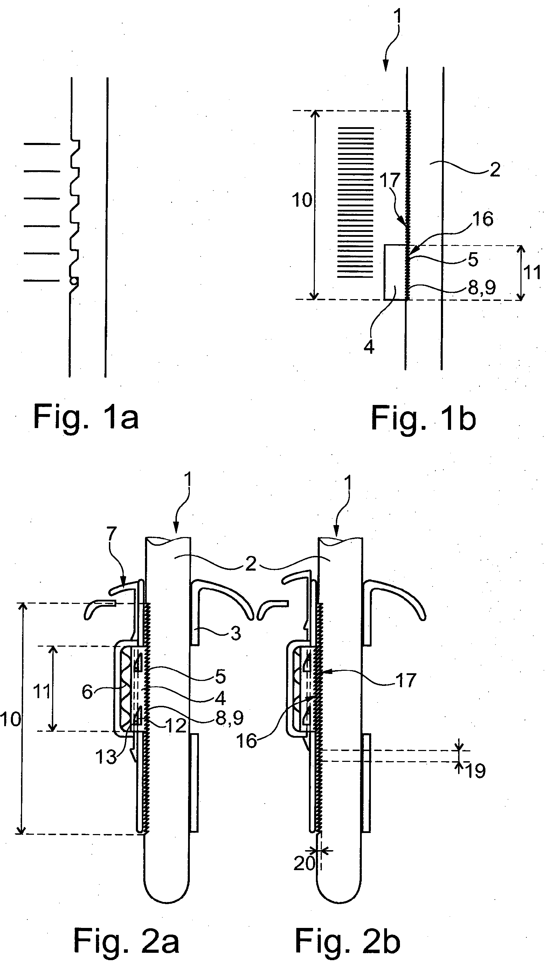

Comme visualisé notamment en figure 2, les crans 9 sont conformés de façon à permettre un coulissement de la tige 2 vers le haut sans actionnement du moyen de déblocage 7 et à empêcher son coulissement vers le bas si ledit moyen n'est pas actionné.

Plus précisément, les faces d'appui mises en jeu entre une dent 8 et un cran 9 lorsqu'une force est appliquée vers le bas sont inscrites dans des plans sensiblement orthogonaux à la direction de ladite force, de sorte qu'un déplacement de la tige 2 vers le bas requière un actionnement du moyen de déblocage 7.

Par ailleurs, les faces d'appui mises en jeu entre une dent 8 et un cran 9 lorsqu'une force est appliquée vers le haut sont agencées, étant ici inscrites dans des plans formant un angle aigu avec la direction de ladite force, de manière à permettre un déplacement de la tige 2 vers le haut sans actionnement du moyen de déblocage 7, ceci sous réserve d'appliquer un effort suffisant pour passer d'une position de réglage à l'autre par effet de coulisseau.

Selon la réalisation des figures 2, la pièce 4 de blocage - respectivement le moyen de déblocage 7 en variante non représentée - comprend au moins une - ici deux - surface de came 12, ledit moyen - respectivement ladite pièce en variante non représentée - comprenant au moins un - ici deux - suiveur de came 13 respectif, ladite surface et ledit suiveur étant agencés pour écarter radialement ladite pièce de la tige 2 par actionnement vertical - par traction vers le haut sur la réalisation des figures 2 - dudit moyen.

Un tel mode de réalisation s'applique à un appui-tête pourvu d'au moins une tige 2, la gaine 3 étant solidaire du dossier de siège.

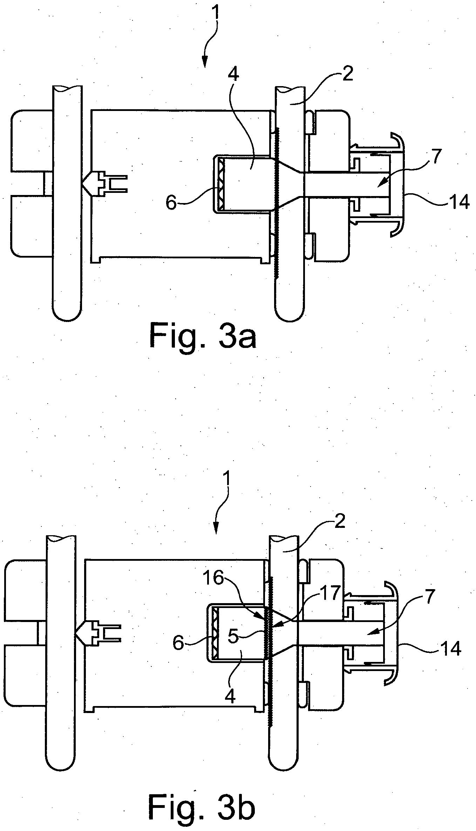

Selon les réalisations des figures 3, la pièce 4 de blocage est interfacée à un bouton poussoir 14 actionnable radialement, l'actionnement dudit bouton entrainant un écartement radial de ladite pièce de la tige 2.

Un tel mode de réalisation s'applique à un dossier pourvu d'au moins une tige 2, la gaine 3 étant solidaire de l'appui-tête.

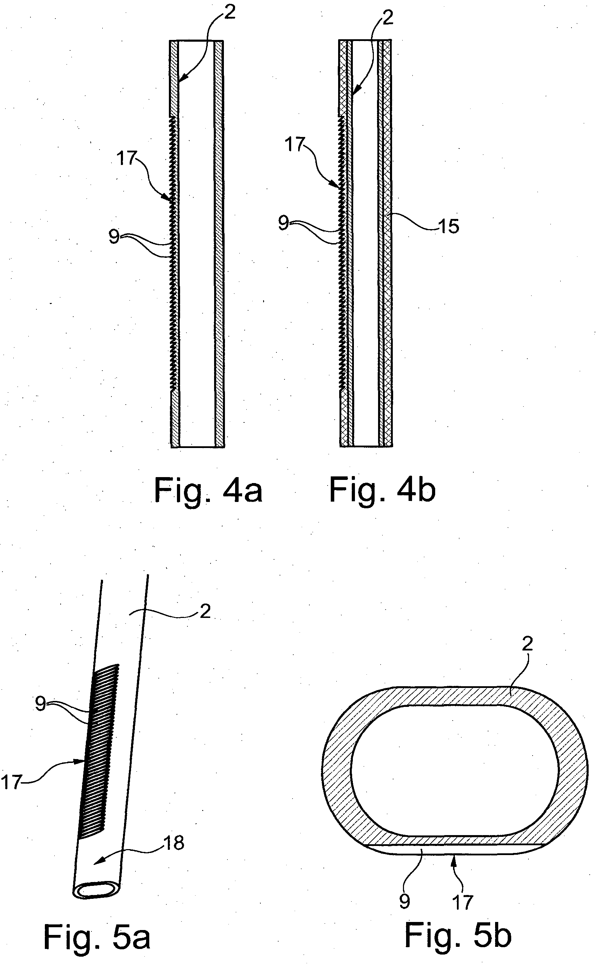

Selon une première variante de réalisation, représentée en figure 4a, la tige 2 est à base d'un tube métallique, la crémaillère réciproque 17 étant réalisée par emboutissage ou usinage.

Selon une deuxième variante de réalisation, représentée en figure 4b, la tige 2 est à base d'un tube métallique, ledit tube étant surmoulé par un manchon 15 en matériau plastique, la crémaillère réciproque 17 étant issue de moulage dudit manchon.

Selon la réalisation de la figure 5, la tige 2 présente, sur au moins une partie de sa longueur, une section verticale en forme d'oblong présentant une grande dimension rectiligne, de sorte que ladite tige présente une surface 18 plane s'étendant verticalement, la crémaillère réciproque 17 s'étendant sur ladite surface.

De la sorte, les crans 9 et dents 8 peuvent présenter une plus grande taille que dans le cas d'une tige 2 de section circulaire, leur permettant de coopérer sur une longueur accrue, ce qui permet de renforcer le blocage de ladite tige.

On décrit à présent, de façon non représentée, un composant de siège de véhicule automobile - en particulier sous la forme d'un appui-tête ou d'un dossier dudit siège - comprenant une tige 2 d'un dispositif 1, ladite tige étant pourvue d'une crémaillère réciproque 17 comprenant une pluralité de crans 9 contigus s'étageant verticalement.

On décrit enfin une gaine 3 d'un dispositif 1, ladite gaine étant pourvue d'une pièce de blocage 4 montée mobile en translation radiale, ladite pièce comprenant un bord de blocage 5 destiné à coopérer avec une pluralité de crans 9 prévus sur une tige 2 crantée d'association d'un appui-tête à un dossier de siège de véhicule automobile, ladite pièce étant actionnée par un moyen ressort 6 vers l'intérieur de ladite gaine, ladite gaine étant pourvue en outre d'un moyen de déblocage 7 permettant un écartement radial de ladite pièce vers l'extérieur de ladite gaine, ledit bord étant sous forme d'une crémaillère 16 comprenant une pluralité de dents 8 contigües s'étageant verticalement.

## Revendications

1. Agencement comprenant un dispositif de blocage (1) en coulissement d'une tige (2) crantée d'association d'un appui-tête à un dossier de siège de véhicule automobile ainsi que d'une tige (2), ledit dispositif comprenant une gaine (3) de réception de ladite tige en coulissement et une pièce (4) de blocage montée mobile en translation radiale par rapport à ladite gaine, ladite pièce comprenant un bord (5) de blocage agencé pour pouvoir se cranter dans ladite tige, sous l'effet d'un moyen ressort (6), de façon à la bloquer en coulissement, ledit dispositif comprenant en outre un moyen de déblocage (7) permettant un écartement radial de ladite pièce de ladite tige afin de permettre son déblocage, ledit dispositif étant **caractérisé en ce que** ledit bord est sous forme d'une crémaillère (16) comprenant une pluralité de dents (8) contigües s'étageant verticalement, ladite tige étant pourvue d'une crémaillère réciproque (17) comprenant une pluralité de crans (9) contigus, l'espace inter-crans successifs étant similaire à l'espace inter-dents successives de sorte que lesdits crans puissent recevoir lesdites dents pour bloquer ladite tige, ladite crémaillère réciproque étant de hauteur (10) supérieure à celle (11) de ladite crémaillère de façon à permettre un blocage de ladite tige selon une pluralité de positions en hauteur.

2. Agencement selon la revendication 1, **caractérisé en ce que** la crémaillère (16) comprend au moins dix dents (8).

3. Agencement selon l'une des revendications 1 ou 2, **caractérisé en ce que** la hauteur (19) de cran (8) est inférieure à 2,5 mm, et notamment inférieure à 1,5 mm.

4. Agencement selon l'une quelconque des revendications 1 à 3, **caractérisé en ce que** la profondeur (20) de cran (8) est inférieure à 1 mm.

5. Agencement selon l'une quelconque des revendications 1 à 4, **caractérisé en ce que** les crans (8) sont conformés de façon à permettre un coulissement de la tige (2) vers le haut sans actionnement du moyen de déblocage (7) et à empêcher son coulissement vers le bas si ledit moyen n'est pas actionné.

6. Agencement selon l'une quelconque des revendications 1 à 5, **caractérisé en ce que** la pièce (4) de blocage - respectivement le moyen de déblocage (7)-comprend au moins une surface de came (12), ledit moyen - respectivement ladite pièce - comprenant au moins un suiveur de came (13) respectif, ladite surface et ledit suiveur étant agencés pour écarter radialement ladite pièce de la tige (2) par actionnement vertical dudit moyen.

7. Agencement selon l'une quelconque des revendications 1 à 5, **caractérisé en ce que** la pièce (4) de blocage est interfacée à un bouton poussoir (14) actionnable radialement, l'actionnement dudit bouton entrainant un écartement radial de ladite pièce de la tige (2).

8. Agencement selon l'une quelconque des revendications 1 à 7, **caractérisé en ce que** la tige (2) est à base d'un tube métallique, la crémaillère réciproque (17) étant réalisée par emboutissage ou usinage.

9. Agencement selon l'une quelconque des revendications 1 à 7, **caractérisé en ce que** la tige (2) est à base d'un tube métallique, ledit tube étant surmoulé par un manchon (15) en matériau plastique, la crémaillère réciproque (17) étant issue de moulage dudit manchon.

10. Agencement selon l'une quelconque des revendications 1 à 9, **caractérisé en ce que** la tige (2) présente sur au moins une partie de sa longueur une section verticale en forme d'oblong présentant une grande dimension rectiligne, de sorte que ladite tige présente une surface (18) plane s'étendant verticalement, la crémaillère réciproque (17) s'étendant sur ladite surface.

11. Gaine (3) d'un agencement selon l'une quelconque des revendications 1 à 10, ladite gaine étant pourvue d'une pièce de blocage (4) montée mobile en translation radiale, ladite pièce comprenant un bord de blocage (5) destiné à coopérer avec une pluralité de crans (9) prévus sur une tige (3) crantée d'association d'un appui-tête à un dossier de siège de véhicule automobile, ladite pièce étant actionnée par un moyen ressort (6) vers l'intérieur de ladite gaine, ladite gaine étant pourvue en outre d'un moyen de déblocage (7) permettant un écartement radial de ladite pièce vers l'extérieur de ladite gaine, **caractérisé en ce que** ledit bord est sous forme d'une crémaillère (16) comprenant une pluralité de dents (8) contigües s'étageant verticalement.

## Patentansprüche

1. Anordnung, umfassend eine Blockiervorrichtung (1) einer gleitenden Verbindungszahnstange (2) einer Kopfstütze der Rückenlehne eines Kraftfahrzeugsitzes sowie einer Stange (2), wobei die Vorrichtung eine Hülle (3) zur Aufnahme der geleitenden Stange umfasst und ein Blockierelement (4), das beweglich in radialer Translation mit Bezug auf die Hülle montiert ist, wobei das Element einen Blockierrand (5) umfasst, der angeordnet ist, um sich in der Stange unter der Einwirkung eines Federmittels (6) verzahnen zu können, um sie gleitend zu blockieren, wobei die Vorrichtung außerdem ein Entblockiermittel (7) umfasst, das eine radiale Entfernung des Elements von der Stange ermöglicht, um seine Entblockierung zu ermöglichen, wobei die Vorrichtung **dadurch gekennzeichnet ist, dass** der Rand die Form einer Zahnstange (16) aufweist, umfassend eine Vielzahl von benachbarten Zähnen (8), die vertikal übereinander liegen, wobei die Stange mit einer umgekehrten Zahnstange (17) versehen ist, umfassend eine Vielzahl von benachbarten Rasten (9), wobei der Raum zwischen aufeinander folgenden Rasten ähnlich dem Raum zwischen aufeinander folgenden Zähnen ist, so dass die Rasten die Zähne aufnehmen können, um die Stange zu blockieren, wobei die umgekehrte Zahnstange eine Höhe (10) aufweist, die größer als diejenige (11) der Zahnstange ist, um eine Blockierung der Stange gemäß einer Vielzahl von Höhenpositionen zu ermöglichen.

2. Anordnung nach Anspruch 1, **dadurch gekennzeichnet, dass** die Zahnstange (16) mindestens zehn Zähne (8) umfasst.

3. Anordnung nach einem der Ansprüche 1 oder 2, **dadurch gekennzeichnet, dass** die Höhe (19) der Rast (8) kleiner als 2,5 mm und insbesondere kleiner als 1,5 mm ist.

4. Anordnung nach einem der Ansprüche 1 bis 3, **dadurch gekennzeichnet, dass** die Tiefe (20) der Rast (8) kleiner als 1 mm ist.

5. Anordnung nach einem der Ansprüche 1 bis 4, **dadurch gekennzeichnet, dass** die Rasten (8) so angepasst sind, dass sie ein Gleiten der Stange (2) nach oben ohne die Betätigung des Entblockiermittels (7) ermöglichen und ihr Gleiten nach unten verhindern, wenn das Mittel nicht betätigt wird.

6. Anordnung nach einem der Ansprüche 1 bis 5, **dadurch gekennzeichnet, dass** das Blockierelement (4) - bzw. das Entblockiermittel (7) - mindestens eine Nockenfläche (12) umfasst, wobei das Mittel - bzw. das Element - mindestens einen entsprechenden Nockenfolger (13) umfasst, wobei die Fläche und der Folger angeordnet sind, um radial das Element von der Stange (2) durch die vertikale Betätigung des Mittels zu entfernen.

7. Anordnung nach einem der Ansprüche 1 bis 5, **dadurch gekennzeichnet, dass** Blockierelement (4) mit einem Druckknopf (14), der radial betätigt werden kann, eine Schnittstelle bildet, wobei die Betätigung des Knopfes eine radiale Entfernung des Elements von der Stange (2) verursacht.

8. Anordnung nach einem der Ansprüche 1 bis 7, **dadurch gekennzeichnet, dass** die Stange (2) auf einem Metallrohr basiert, wobei die umgekehrte Zahnstange (17) durch Tiefziehen oder Bearbeitung hergestellt ist.

9. Anordnung nach einem der Ansprüche 1 bis 7, **dadurch gekennzeichnet, dass** die Stange (2) auf einem Metallrohr basiert, wobei das Rohr durch eine Muffe (15) aus Kunststoff geformt ist, wobei die umgekehrte Zahnstange (17) aus der Form der Muffe stammt.

10. Anordnung nach einem der Ansprüche 1 bis 9, **dadurch gekennzeichnet, dass** die Stange (2) auf mindestens einem Teil ihrer Länge eine vertikalen Sektion in länglicher Form aufweist, die eine große gerade Abmessung aufweist, so dass die Stange eine ebene Fläche (18) aufweist, die sich vertikal erstreckt, wobei sich die umgekehrte Zahnstange (17) auf der Fläche erstreckt.

11. Hülle (3) einer Anordnung nach einem der Ansprüche 1 bis 10, wobei die Hülle mit einem Blockierelement (4) versehen ist, das beweglich in radialer Translation montiert ist, wobei das Element einen Blockierrand (5) umfasst, der ausgelegt ist, um mit einer Vielzahl von Rasten (9) zusammenzuarbeiten, die auf einer Verbindungszahnstange (3) einer Kopfstütze der Rückenlehne eines Kraftfahrzeugsitzes vorgesehen sind, wobei das Element durch ein Federmittel (6) hin zum Inneren der Hülle betätigt wird, wobei die Hülle außerdem mit einem Entblockiermittel (7) versehen ist, das eine radiale Entfernung des Elements hin zum Äußeren der Hülle ermöglicht, **dadurch gekennzeichnet, dass** der Rand die Form einer Zahnstange (16) aufweist, umfassend eine Vielzahl von benachbarten Zähnen (8), die vertikal übereinander liegen.

## Claims

1. Arrangement comprising a blocking device (1) for preventing the sliding of a ring-threaded shank (2) for combining a headrest with a backrest of a motor vehicle seat, as well as a shank (2), said device comprising a sheath (3) for receiving said sliding shank and a blocking part (4) mounted such that it can move in radial translation in relation to said sheath, said part comprising a blocking edge (5) arranged such that it can engage in said shank, under the effect of a spring means (6), so as to prevent it from sliding, said device further comprising a releasing means (7) enabling said part to be radially distanced from said shank to allow for its release, said device being **characterised in that** said edge is in the form of a rack (16) comprising a plurality of adjacent teeth (8) extending vertically, said shank being equipped with an inverse rack (17) comprising a plurality of adjacent notches (9), the space between successive notches being similar to the space between successive teeth such that said notches can receive said teeth to block said shank, said inverse rack having a height (10) that is greater than that (11) of said rack so as to enable said shank to be blocked in a plurality of height positions.

2. Arrangement according to claim 1, **characterised in that** the rack (16) comprises at least ten teeth (8).

3. Arrangement according to one of claims 1 or 2, **characterised in that** the height (19) of the notches (8) is less than 2.5 mm, and in particular less than 1.5 mm.

4. Arrangement according to any one of claims 1 to 3, **characterised in that** the depth (20) of the notches (8) is less than 1 mm.

5. Arrangement according to any one of claims 1 to 4, **characterised in that** the notches (8) are shaped so as to enable the shank (2) to slide upwards without actuating the releasing means (7) and to prevent it from sliding downwards if said means is not actuated.

6. Arrangement according to any one of claims 1 to 5, **characterised in that** the blocking part (4) - respectively the releasing means (7) - comprises at least one cam surface (12), said means - respectively said part - comprising at least one respective cam follower (13), said surface and said follower being arranged to radially distance said part from the shank (2) by the vertical actuation of said means.

7. Arrangement according to any one of claims 1 to 5, **characterised in that** the blocking part (4) is interfaced with a push-button (14) that can be radially actuated, the actuation of said button driving the radial distancing of said part from the shank (2).

8. Arrangement according to any one of claims 1 to 7, **characterised in that** the shank (2) has a metal tube base, the inverse rack (17) being made by stamping or machining.

9. Arrangement according to any one of claims 1 to 7, **characterised in that** the shank (2) has a metal tube base, said tube being cast moulded by a sleeve (15) made from a plastic material, the inverse rack (17) being made from the casting of said sleeve.

10. Arrangement according to any one of claims 1 to 9, **characterised in that** the shank (2) has, on at least one portion of its length, a vertical cross-section with an oblong shape and a large rectilinear dimension, such that said shank has a flat surface (18) extending vertically, the inverse rack (17) extending on said surface.

11. Sheath (3) of an arrangement according to any one of claims 1 to 10, said sheath being equipped with a blocking part (4) mounted such that it can move in radial translation, said part comprising a blocking edge (5) intended to engage with a plurality of notches (9) provided on a ring-threaded shank (3) for combining a headrest with a backrest of a motor vehicle seat, said part being actuated by a spring means (6) inwards towards said sheath, said sheath being further equipped with a releasing means (7) enabling said part to be radially distanced outwards from said shank, **characterised in that** said edge is in the form of a rack (16) comprising a plurality of adjacent teeth (8) extending vertically.
